# EUROPEAN PATENT APPLICATION

(11) **EP 2 337 323 A1**
(43) Date of publication of application: **22.06.2011**
(21) Application number: 09179599.7
(22) Date of filing: 17.12.2009
(51) Int. Cl.: H04M 1/725, G06F 3/01

(54) **Method and an apparatus for performing interaction between a mobile device and a screen**

(71) Applicant: NTT DoCoMo, Inc., Tokyo (JP)
(72) Inventor: Holleis, Paul, 81929, Munich (DE); Wagner, Matthias, 80999, Munich (DE)
(74) Representative: Betten & Resch

(57) **Abstract**

A method for performing an interaction between a mobile device and a screen having a plurality of NFC tags comprising data which can be read by said mobile device by using an NFC reader module of said mobile device to read a tag, wherein an image which is part of an application service is displayed on said screen such that one or more tags of the screen correspond to the indication of respective inputs or selections which the user may choose through his mobile phone when using said application service, wherein said image being displayed on said screen is controlled by a server on which said application service is running, said server being connected to said mobile phone of said user through a network link, said method comprising:
selecting one NFC tag by the mobile phone of the user;
transmitting said selection to said server on which said application service is running;
in response to said selection, controlling said display on said screen such that there is displayed on said screen a graphical user interface offering a user to select an input: receiving from a gesture detection module of said mobile device data which is generated in response to the user moving his mobile device and which is sensed by said gesture detection module is then processed as an input to said graphical user interface to thereby enable the selection of said input by said user.

## Description

### FIELD OF THE INVENTION

The present invention relates to a method and an apparatus for performing interaction between a mobile device and a screen.

In particular it relates to the provision of a user interface for enabling interaction between mobile communication terminals with a use in combination with static and dynamic posters based on NFC tags.

### BACKGROUND OF THE INVENTION

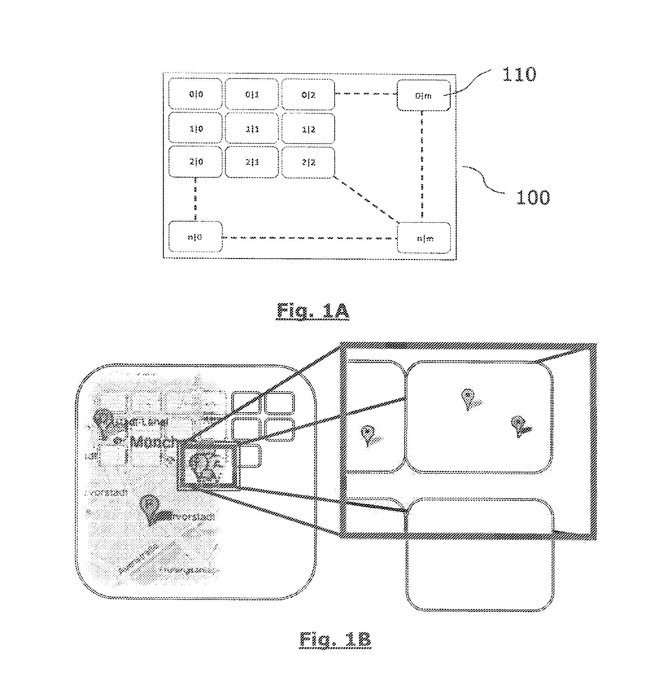

MULTITAG is a joint development project of Lancaster University and NTT DOCOMO, Inc. It involves a screen which has a matrix of NFC (near-field communication) tags which can interact with a mobile phone having a NFC reader. Such a screen is schematically illustrated in Fig. 1A where one can see a screen 100 having a grid of n X m NFC tags 110 which can then interact with a mobile phone having a NFC reader.

During an application there is then displayed an image on the screen, and parts of the image which correspond to the selection of an input can then be selected through NFC interaction by moving the mobile phone close to the corresponding tag which is located at the place where the option to be selected is displayed. E.g. there may be displayed a map of a city, and at the locations where there are restaurants there may be displayed some indicator on the map. The user who is interested in more information about a restaurant at a certain location may then move his mobile phone close to the indicator which indicates the location of the restaurant. Through interaction between the mobile phone and the NFC tag located behind the indicator the application may then be triggered to change the display on the screen such that there is displayed additional information about the selected restaurant.

In other words, the Multitag system enables the selection through NFC interaction between a mobile phone and a screen tagged with a NFC grid. Thereby the screen can be dynamic which means that depending on the interaction the image which is displayed on the screen may change, and as a consequence also the meaning of the information in a certain tag in the context of the application may change. While it may first may have the meaning of selecting a certain restaurant, the same tag may have in the next step (after the display has changed) have the meaning of selecting other information like "opening times" or "menu" for the restaurant which was selected in the previous step.

The Interaction with a mobile phone with static or dynamic displays using the MULTITAG technique may therefore often involve choosing between several options, such as choosing on a map a restaurant about which more information is desired. Such a selection may be problematic, especially in cases where several options (e.g. multiple restaurants) are displayed on top of one marker and thus a selection cannot be made with MULTITAG markers alone, because the granularity of the options is higher than the granularity of the NFC grid. This scenario is illustrated in Fig. 1 B. One can see on the left-hand side a screen where on the left half schematically it is shown that a map (here a map of the city of Munich) is displayed on top of a grid of NFC elements which can be more clearly seen on the right half of the screen where the map is not shown. In reality of course the map would be shown on the whole screen, it is only for illustrating the NFC grid that the map is not shown on the right-hand side. It may now often happen that several markers (in the example these indicate points of interest such as e.g. restaurants) are displayed on the same physical NFC tag. As shown in Fig. 1B on the right-hand side which illustrates an enlarged part of the screen on the left-hand side, there are two markers which fall onto the area of one NFC tag. there This makes it impossible to select one specific marker with the phone by means of NFC interaction.

In order to solve this problem one may imagine the following possible solutions.
1. display a list of options on the phone and select by scrolling through this list on the phone
2. change the main display to associate a number to each option and let the user pick one by pressing the corresponding key on the phone
3. display or highlighting one option at a time either on the main display or the phone and using a key on the phone to cycle through the options.
4. change the display to show a list of options and use the MULTIITAG technique to select one with the phone on the main display.

All of these possible solutions either require the user to use the keyboard of the phone to execute the selection. The keyboard interaction is disadvantageous in an application where the user has already made an interaction with a (large) screen, because it requires the user to change his attention from the large screen to the tiny screen of the mobile phone. The above solutions 2 and 3 occlude a part of the display and also require the user to split attention between the phone display and the main display.

Moreover, compared with the interaction through NFC the keyboard interaction is by far less intuitive.

The above solution 4 occludes part of the display, and possibly confuses the user since the same physical area on the main display is used for different purposes. It also needs to use a large part of the main display due to the large tag size.

It is therefore desirable to provide the user with an interface where the selection can be easily made without having to pay attention to the tiny keyboard of the mobile phone. Moreover, it would be desirable if the interface could provide a more intuitive and easy way of interacting with the application for making the selection than by using the keyboard of the phone.

### SUMMARY OF THE INVENTION

According to one embodiment there is provided a method for performing an interaction between a mobile device and a screen having a plurality of NFC tags comprising data which can be read by said mobile device by using an NFC reader module of said mobile device to read a tag, wherein an image which is part of an application service is displayed on said screen such that one or more tags of the screen correspond to the indication of respective inputs or selections which the user may choose through his mobile phone when using said application service, wherein said image being displayed on said screen is controlled by a server on which said application service is running, said server being connected to said mobile phone of said user through a network link, said method comprising:
selecting one NFC tag by the mobile phone of the user;
transmitting said selection to said server on which said application service is running;
in response to said selection, controlling said display on said screen such that there is displayed on said screen a graphical user interface offering a user to select an input;
receiving from a gesture detection module of said mobile device data which is generated in response to the user moving his mobile device and which is sensed by said gesture detection module and is then processed as an input to said graphical user interface to thereby enable the selection of said input by said user.

In this way the user can be provided with an easy and intuitive interface for making selections which avoids the disadvantages like interacting with two different screens or shifting his focus to the tiny screen of the mobile phone.

The gesture detection module may be any sensor module which senses a gesture by the user to thereby input data to the user interface. The sensor module may e.g. an accelerator module which senses an acceleration, or a motion sensor which detects motion. It may as well (or additionally) comprise an orientation sensor such as a gyroscope or a compass. Another option could be that the sensor module comprises a camera which detects based on the camera image motion or orientation of the mobile device. Furthermore, the gesture detection module may as well comprise a combination of different sensor modules as the ones mentioned before. Based on the sensed data the gesture detection module detects a gesture of the user such as an orientation or a motion or an acceleration of the mobile device and processes this as an input to said graphical user interface to thereby enable the selection of said input by said user.

According to one embodiment said graphical user interface offering a user to select an input by moving the mobile device is displayed in response to the selection of a tag which triggers a set of further possible options from which one has to be selected.

In this way the user interface enables a selection of options provided by the application service in an easy and intuitive manner.

According to one embodiment said graphical user interface offering a user to select an input by moving the mobile device is displayed in response to the selection of a tag for which there are more than one options to be selected in the area of said tag so that the selection of the tag cannot uniquely identify the selection of an option.

Thereby there can be solved the problem where more than one selectable options are displayed in the area belonging to one tag.

According to one embodiment said graphical user interface comprises:
a graphical option indicator which indicates a plurality of possible option which may be chosen by the user;
a graphical selection indicator indicating the currently selected option of said plurality of options, wherein
when the user moves his mobile device said gesture detection module senses said movement and processes the resulting data such that a movement of the mobile device by said user results in the movement of the graphical selection indicator to a different selected option indicated by said graphical option indicator as being selected.

This enables the user to view the currently selected item which he then may later confirm.

According to one embodiment said graphical option indicator comprises one or more of the following:
an arc of which different parts belong to different selected options;
a plurality of icons located at different locations of said screen; and/or wherein said graphical selection indicator comprises one or more of the following:
   an arrow pointing to the currently selected option among the options of said graphical option indicator;
   a ball, a shaded section, a cross or any mark which points to or marks the currently selected option among said plurality of options indicated by said graphical option indicator.

In this way several different graphical option indicators may be implemented.

According to one embodiment the method further comprises:
enabling the user to change the currently selected option among the plurality of options indicated by said graphical option indicator through one of the following gestures conducted using said mobile device:
   tilting said mobile device;
   rotating said mobile device.

In this way several ways of changing the (current) selection may be implemented.

According to one embodiment the final selection of the currently selected option is made by one of the following:
tilting, or rotating the mobile device or making any sensible gesture;
quickly shaking the mobile device;
pressing a key on the mobile device.

These are several possible implementations of confirming the current selection.

According to one embodiment said graphical user interface is displayed on said screen if the granularity of said NFC tags is not sufficient so that one NFC tag corresponds to more than one selectable inputs on said screen, wherein the graphical user interface then is displayed to enable the user a selection among said more than one selectable inputs.

This solves the problem where the granularity of the NFC grid is not sufficient to correspond to the selectable options.

According to one embodiment said graphical option indicator is an arc or a circle which is divided into sections which correspond to different options; or
said graphical option indicator is an arc or a circle which has different colours which correspond to different options.

These are possible implementations to intuitively visualize the selectable options.

According to one embodiment said graphical option indicator is an arc or a circle which in response to a movement of said mobile device moves such that the a graphical selection indicator indicating the currently selected option points to different selected options as said arc or circle moves.

This is a further possible implementation to intuitively visualize the selectable options.

According to one embodiment as the arc or circle rotates or moves, new options are revealed on said arc or circle such that the option corresponding to a certain location of the moving arc or circle changes to reveal a new option.

In this way an unlimited number of selectable options can be displayed.

According to one embodiment said graphical option indicator is an arc or a circle, and wherein multiple arcs or circles are provided to increase the number of displayable options, where the user may choose the currently active arc among the displayed ones.

This is a further embodiment to increase the number of selectable options which can be displayed.

According to one embodiment there is provided an apparatus for performing an interaction between a mobile device and a screen having a plurality of NFC tags comprising data which can be read by said mobile device by using an NFC reader module of said mobile device to read a tag, wherein an image which is part of an application service is displayed on said screen such that one or more tags of the screen correspond to the indication of respective inputs or selections which the user may choose through his mobile phone when using said application service, wherein said image being displayed on said screen is controlled by a server on which said application service is running, said server being connected to said mobile phone of said user through a network link, said apparatus comprising:
a module for selecting one NFC tag by the mobile phone of the user;
a module for transmitting said selection to said server on which said application service is running;
a module for in response to said selection, controlling said display on said screen such that there is displayed on said screen a graphical user interface offering a user to select an input;
a module for receiving from a gesture detection module of said mobile device data which is generated in response to the user moving his mobile device and which is sensed by said gesture detection module and is then processed as an input to said graphical user interface to thereby enable the selection of said input by said user.

In this way an apparatus or system according to an embodiment of the invention may be implemented.

According to one embodiment there is provided a computer for running an application during which there is performed an interaction between a mobile device and a screen having a plurality of NFC tags comprising data which can be read by said mobile device by using an NFC reader module of said mobile device to read a tag, wherein an image which is part of an application service is displayed on said screen such that one or more tags of the screen correspond to the indication of respective inputs or selections which the user may choose through his mobile phone when using said application service, wherein said image being displayed on said screen is controlled by said computer on which said application service is running, said computer being connected to said mobile phone of said user through a network link, said computer comprising:
a module for receiving a selection of one NFC tag which has been selected by the mobile phone of the user;
a module for in response to said selection, controlling said display on said screen such that there is displayed on said screen a graphical user interface offering a user to select an input;
a module for receiving from an gesture detection module of said mobile device data which is generated in response to the user moving his mobile device and which is sensed by said gesture detection module and is then processed as an input to said graphical user interface to thereby enable the selection of said input by said user.

In this way a computer or host on which an application service according to an embodiment of the invention may be implemented,

According to one embodiment the apparatus further comprises one or more modules to perform the operations as described in connection with the other embodiments of the invention.

According to one embodiment there is provided a computer program comprising computer program code which when being executed on a computer enables said computer to carry out a method according to one of the embodiments of the invention.

### DESCRIPTION OF THE DRAWING

Fig. 1A schematically illustrates a tagged screen used in connection with an embodiment of the invention.
Fig. 1B schematically illustrates a scenario with a problem solved by an embodiment of the invention.
Fig. 2 schematically illustrates a user interface according to an embodiment of the invention.
Figs. 3 to 7 schematically illustrate user interfaces according to further embodiments of the invention.

### DETAILED DESCRIPTION

Before describing embodiments of the invention at first some terms which will be used in the following description will be explained.

### NFC: Near Field Communication

Gesture detection module: a sensor used to the measure (3D) orientation of a device in space (or to otherwise detect gestures performed with the device it is attached to). One example is an accelerometer, other examples are possible as well.

Main display: the (potentially larger and publically accessible and viewable) display on which most information is displayed in contrast to the display of the user's mobile device.

According to one embodiment there is provided a method for operating a user interface consisting of a main display and a mobile device, the latter of which is used as control element. The mobile device uses a built-in or external gesture detection module such as an accelerometer in order to enable the user to easily choose between a set of options displayed on the main display. For that purpose there may be provided a set of graphical widgets that can be used to display several options and offer the user the possibility to choose one by rotating and tilting the mobile device. Besides discrete options, continuous scales for the input of, e.g., a temperature value can also be used.

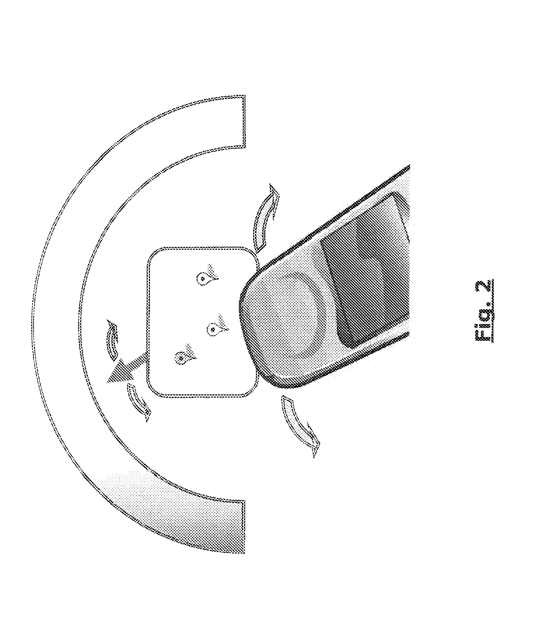

In Fig. 2 an embodiment of this general idea is visualized. An additional graphical widget is presented that lets a user choose an option by tilting the phone in the specific direction. Feedback is directly provided to the host on which the application is running.

In the example of Fig. 2 there are three possible selections (e.g. three restaurants), and they are displayed by an arc which has three different colours each of which corresponds to one possible selection. A marker (in Fig. 2 an arrow) indicates the current selection, and by rotating his mobile phone the user may cause the gesture detection module (e.g. an accelerometer) to sense the rotation and the data thus generated is then processed and translated into a movement of the marker. In this way the user may perform a selection by rotating his mobile phone to thereby move the marker which indicates the selection out of a plurality of options. The selection may then be finally confirmed e.g. by shaking the mobile device which can be detected by the gesture detection module (e.g. the accelerometer), or it can be made by using a key of the phone.

The proposed approach ensures that the attention of the user can remain on the main display, that only a small portion of the main display is used to display additional information which cannot be confused with the mode of operation before the selection process was initiated, and that the selection technique is quick and intuitive. In one embodiment the selection widgets are independent of the type of application they are used for in a specific instance and thus foster standardisation and user familiarisation.

In the following further embodiments of the invention will be described.

According to one embodiment there is used an apparatus combining an NFC tag reader and an accelerometer (or similar device implementing a gesture detection module that can detect the orientation and change in orientation of the device). This can be built-in (as found in the Nokia N96, iPhone, etc.) or it can be an externally connected sensor.

In one embodiment there is provided a set of widgets in conjunction with which the values read from the gesture detection module (such as e.g. an accelerometer) can be used to choose between a set of options. The selection technique is employed when it is impossible or inconvenient to make a choice using MULTITAG markers only (e.g. because there are more than one options in the area of one tag or because the selection of one tag triggers a set of further possible options from which one has to be selected). The advantage is that there is no split and transition of attention and focus between the main display and the display of the mobile device.

Now there will be shown several embodiments implementing such widgets in connection with the figures.

The widgets in one embodiment are designed in a general way such that they can be applied in various settings (e.g. with a various number of possible options or ordinal / interval / continuous data to choose from).

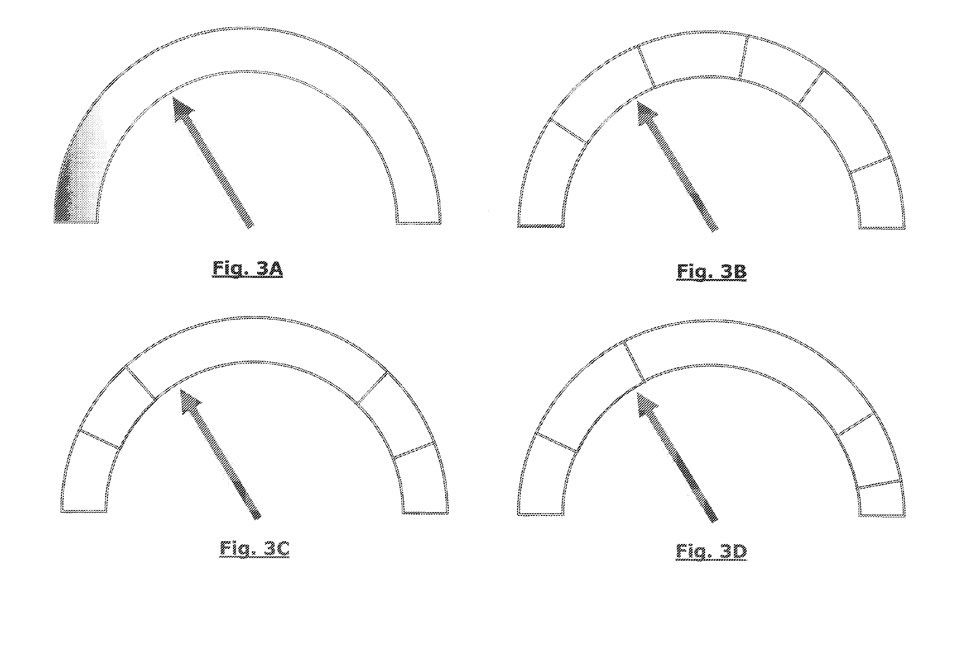

Fig. 3A illustrates the already mentioned Options visualized by different colors,
Fig. 3B illustrates options visualized by different areas.
Fig. 3C illustrates options visualized by different areas using a larger 'default' selection area.
Fig. 3D illustrates a widget where size and position of the areas corresponding to selectable options are chosen according to expected use / probability. The skilled person will recognize that this requires some kind of information about past selections, and then based one the information about past selections there is derived a probability about the next selection, and then e.g. the size of the areas is such that the area which corresponds to the selection with the highest probability is the largest, and the other sizes of the other areas are smaller corresponding to the respective likelihood of their selection,

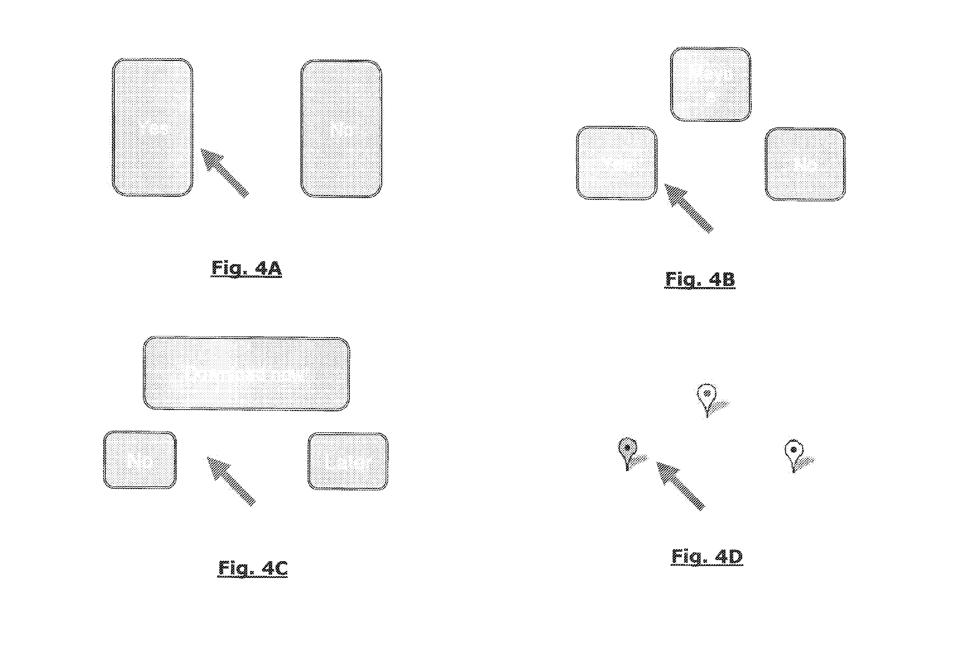

Further embodiments of widgets are shown in Figs. 4A to 4D.
Fig. 4A illustrates the selection between two generic options.
Fig. 4B illustrates the selection between 3 general options.
Fig. 4C illustrates the selection between 3 general options with one default option.
Fig. 4D illustrates the selection between 3 specific options with concrete icons,

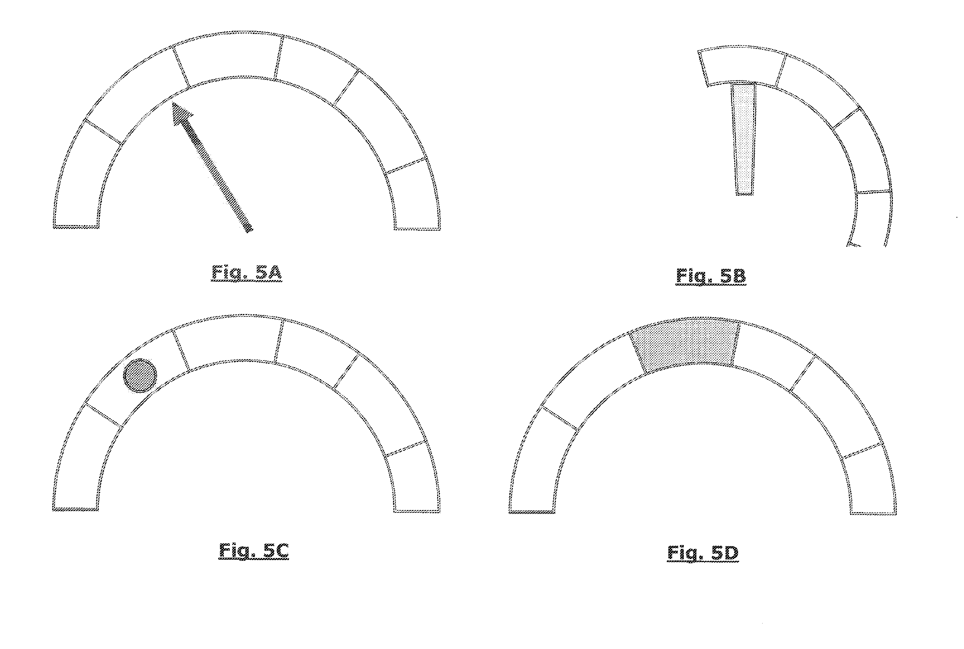

Figs. 5A to 5D illustrate embodiments where the visualization of the selected options is performed in different ways. As illustrated, the currently selected item can be indicated by an arrow, a ball, or a shaded section. Another way is to rotate the arc instead and have the selected item stay on top.

Fig. 5A illustrates an embodiment where an arrow points to the selected option.
Fig. 5B illustrates an embodiment where instead the arc is rotating and the selection symbol (shown in grey) is fixed.
Fig. 5C illustrates an embodiment where the selection is indicated by a ball moving through the options with or without "snap to grid".
Fig. 5D illustrates an embodiment where the selection is indicated by highlighting the currently selected area with 'snap to grid'.

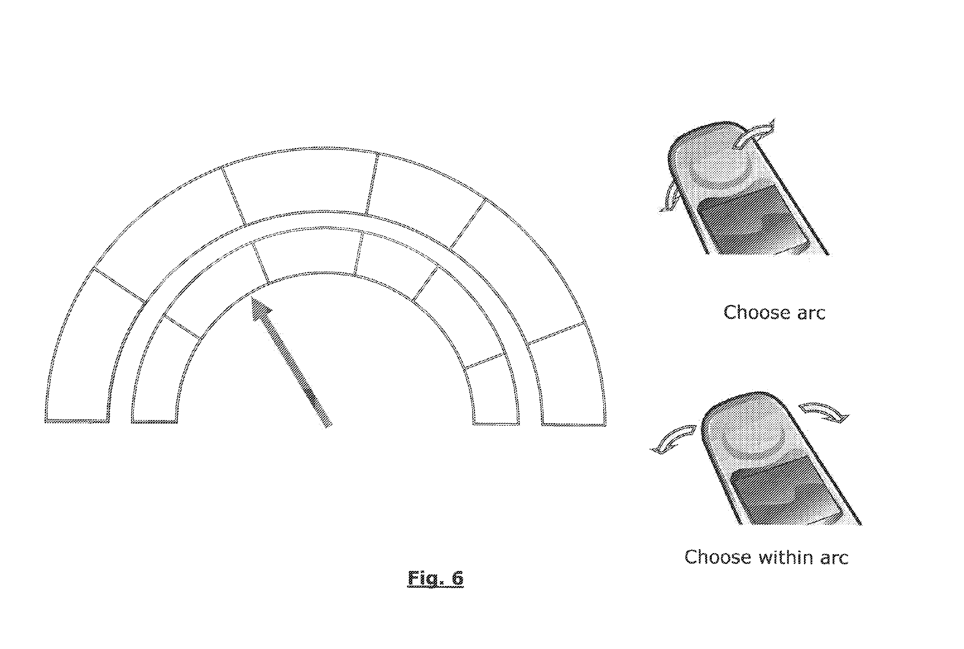

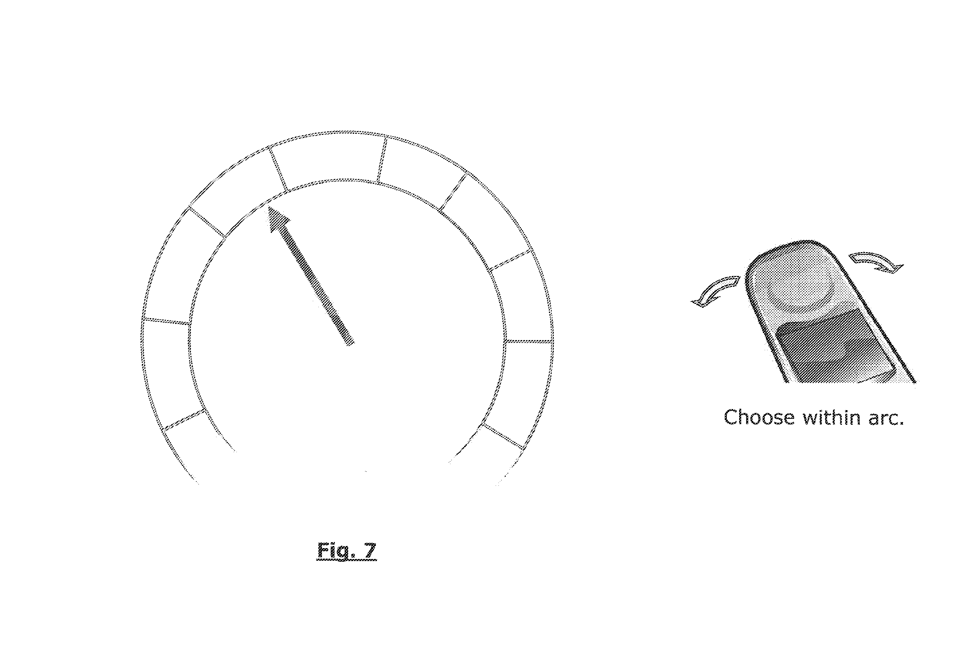

With the previously described embodiments the number of options that can be presented to the user is still limited. Figs. 6 and 7 illustrate an embodiments which increase the number of options by increasing the number of arcs (Fig. 6) or by virtually extending the arc to be able to hold more items (Fig. 7).

As shown in Fig. 6, there are provided two arcs, each offering options. By rotating the mobile phone around a first axis the user may choose among the options within an arc, by rotating the mobile phone around a second axis the user may choose one of the two (or more) arcs.

Fig. 7 illustrates a further embodiment increasing the number of options that can be displayed. This arc can contain potentially unlimited number of items. If the arrow is at one end, the arc rotates to reveal more selectable options. By using rate control (i.e. tilting left rotates clock-wise until tilting is stopped) there can by displayed an unlimited number of options. The confirmation of the current selection then again (as in the previous embodiments) may be made by rotating the mobile phone around another axis, or by shaking it quickly (which can be detected by the gesture detection module, e.g. an accelerometer) or by pushing a key of the keyboard.

The skilled person will recognize that the embodiments of the invention may be implemented by suitably programming an existing NFC tagged screen, the corresponding application running on a host, and the mobile device interacting with the screen in such a way that the functionalities as described in connection with the above embodiments are enabled. Embodiments of the invention therefore may be implemented by hardware, by suitably programmed software, or by a combination of both. According to one embodiment there is provided a server on which the application service is running and which enables a user interface according to an embodiment of the invention. According to a further embodiment there is provided a mobile phone which performs the operations as described in connection with the previous embodiments. According to a further embodiment there is provided a system comprising the NFC tagged screen, the mobile device and the server computer on which the application service is running.

## Claims

1. A method for performing an interaction between a mobile device and a screen having a plurality of NFC tags comprising data which can be read by said mobile device by using an NFC reader module of said mobile device to read a tag, wherein an image which is part of an application service is displayed on said screen such that one or more tags of the screen correspond to the indication of respective inputs or selections which the user may choose through his mobile phone when using said application service, wherein said image being displayed on said screen is controlled by a server on which said application service is running, said server being connected to said mobile phone of said user through a network link, said method comprising:
selecting one NFC tag by the mobile phone of the user;
transmitting said selection to said server on which said application service is running;
in response to said selection, controlling said display on said screen such that there is displayed on said screen a graphical user interface offering a user to select an input;
receiving from an gesture detection module of said mobile device data which is generated in response to the user moving his mobile device and which is sensed by said gesture detection module is then processed as an input to said graphical user interface to thereby enable the selection of said input by said user.

2. The method of claim 1, wherein
said graphical user interface offering a user to select an input by moving the mobile device is displayed in response to the selection of a tag which triggers a set of further possible options from which one has to be selected, or in response to the selection of a tag for which there are more than one options to be selected in the area of said tag so that the selection of the tag cannot uniquely identify the selection of an option.

3. The method of claim 1 or 2, wherein said graphical user interface comprises:
a graphical option indicator which indicates a plurality of possible option which may be chosen by the user;
a graphical selection indicator indicating the currently selected option of said plurality of options, wherein
when the user moves his mobile device said gesture detection module senses said movement and processes the resulting data such that a movement of the mobile device by said user results in the movement of the graphical selection indicator to a different selected option indicated by said graphical option indicator as being selected.

4. The method of claim 1, 2 or 3, wherein
said graphical option indicator comprises one or more of the following:
an arc of which different parts belong to different selected options;
a plurality of icons located at different locations of said screen; and/or wherein said graphical selection indicator comprises one or more of the following:
an arrow pointing to the currently selected option among the options of said graphical option indicator;
a ball, a shaded section, a cross or any mark which points to or marks the currently selected option among said plurality of options indicated by said graphical option indicator.

5. The method of one of the preceding claims, further comprising:
enabling the user to change the currently selected option among the plurality of options indicated by said graphical option indicator through one of the following gestures conducted using said mobile device:
tilting said mobile device;
rotating said mobile device.

6. The method of one of the preceding claims, wherein the final selection of the currently selected option is made by one of the following
tilting, or rotating the mobile device or making any sensible gesture;
quickly shaking the mobile device;
pressing a key on the mobile device.

7. The method of one of the preceding claims, wherein said graphical user interface is displayed on said screen if the granularity of said NFC tags is not sufficient so that one NFC tag corresponds to more than one selectable inputs on said screen, wherein the graphical user interface then is displayed to enable the user a selection among said more than one selectable inputs.

8. The method of one of the preceding claims, wherein
said graphical option indicator is an arc or a circle which is divided into sections which correspond to different options; or
said graphical option indicator is an arc or a circle which has different colours which correspond to different options.

9. The method of one of the preceding claims, wherein
said graphical option indicator is an arc or a circle which in response to a movement of said mobile device moves such that the a graphical selection indicator indicating the currently selected option points to different selected options as said arc or circle moves.

10. The method of claim 9, wherein as the arc or circle rotates or moves, new options are revealed on said arc or circle such that the option corresponding to a certain location of the moving arc or circle changes to reveal a new option.

11. The method of one of the preceding claims, wherein
said graphical option indicator is an arc or a circle, and wherein
multiple arcs or circles are provided to increase the number of displayable options, where the user may choose the currently active arc among the displayed ones.

12. An apparatus for performing an interaction between a mobile device and a screen having a plurality of NFC tags comprising data which can be read by said mobile device by using an NFC reader module of said mobile device to read a tag, wherein an image which is part of an application service is displayed on said screen such that one or more tags of the screen correspond to the indication of respective inputs or selections which the user may choose through his mobile phone when using said application service, wherein said image being displayed on said screen is controlled by a server on which said application service is running, said server being connected to said mobile phone of said user through a network link, said apparatus comprising:
a module for selecting one NFC tag by the mobile phone of the user;
a module for transmitting said selection to said server on which said application service is running;
a module for in response to said selection, controlling said display on said screen such that there is displayed on said screen a graphical user interface offering a user to select an input;
a module for receiving from a gesture detection module of said mobile device data which is generated in response to the user moving his mobile device and which is sensed by said gesture detection module and is then processed as an input to said graphical user interface to thereby enable the selection of said input by said user.

13. An computer for running an application during which there is performed an interaction between a mobile device and a screen having a plurality of NFC tags comprising data which can be read by said mobile device by using an NFC reader module of said mobile device to read a tag, wherein an image which is part of an application service is displayed on said screen such that one or more tags of the screen correspond to the indication of respective inputs or selections which the user may choose through his mobile phone when using said application service, wherein said image being displayed on said screen is controlled by said computer on which said application service is running, said computer being connected to said mobile phone of said user through a network link, said computer comprising:
a module for receiving a selection of one NFC tag which has been selected by the mobile phone of the user;
a module for in response to said selection, controlling said display on said screen such that there is displayed on said screen a graphical user interface offering a user to select an input;
a module for receiving from a gesture detection module of said mobile device data which is generated in response to the user moving his mobile device and which is sensed by said gesture detection module and is then processed as an input to said graphical user interface to thereby enable the selection of said input by said user.

14. The apparatus of claim 12 or 13, further comprising:
a module for performing the operations as defined in one of claims 1 to 11.

15. A computer program comprising computer program code which when being executed on a computer enables said computer to carry out a method according to one of claims 1 to11.

## Amended claims

### Amended claims in accordance with Rule 137(2) EPC.

**1.** A method for performing an interaction between a mobile device and a screen having a plurality of NFC tags comprising data which read by said mobile device by using an NFC reader module of said mobile device wherein an image which is part of an application service is displayed on said screen such that one or more tags of the screen correspond to the indication of respective inputs or selections by markers which the user may choose through his mobile phone when using said application service, wherein said image being displayed on said screen is controlled by a server on which said application service is running, said server being connected to said mobile phone of said user through a network link, said method comprising:
selecting one NFC tag by the mobile phone of the user;
transmitting said selection to said server on which said application service is running;
in response to said selection, controlling said display on said screen such that there is displayed on said screen a graphical user interface offering a user to select an input;
receiving from an gesture detection module of said mobile device data which is generated in response to the user moving his mobile device and which is sensed by said gesture detection module and is then processed as an input to said graphical user interface to thereby perform the selection of said input by said user,
wherein
said graphical user interface is displayed on said screen if the granularity of said NFC tags is not sufficient so that one NFC tag corresponds to more than one selectable inputs on said screen,
said graphical user interface offering a user to select an input by moving the mobile device is displayed in response to the selection of a tag for which there are more than one options to be selected in the area of said tag so that the selection of the tag cannot uniquely identify the selection of an option,
wherein said graphical user interface comprises:
a graphical option indicator which indicates a plurality of possible option which may be chosen by the user;
a graphical selection indicator indicating the currently selected option of said plurality of options, wherein
when the user moves his mobile device said gesture detection module senses said movement and processes the resulting data such that a movement of the mobile device by said user results in the movement of the graphical selection indicator to a different selected option indicated by said graphical option indicator as being selected,
wherein said gesture conducted by said mobile device comprises:
rotating said mobile device.

**2.** The method of claim 1, wherein
said graphical option indicator is an arc or a circle which is divided into sections which correspond to different options: or
said graphical option indicator is an arc or a circle which has different colours which correspond to different options, wherein
said graphical option indicator is an arc or a circle which in response to a movement of said mobile device moves such that the a graphical selection indicator indicating the currently selected option points to different selected options as said arc or circle moves,
wherein said graphical selection indicator comprises one or more of the following:
an arrow pointing to the currently selected option among the options of said graphical option indicator;
a ball, a shaded section, a cross or any mark which points to or marks the currently selected option among said plurality of options indicated by said graphical option indicator.

**3.** The method of one of the preceding claims, wherein the final selection of the currently selected option is made by one of the following:
tilting, or rotating the mobile device or making any sensible gesture:
quickly shaking the mobile device;
pressing a key on the mobile device.

**4.** The method of claim 2, wherein as the arc or circle rotates or moves, new options are revealed on said arc or circle such that the option corresponding to a certain location of the moving arc or circle changes to reveal a new option.

**5.** The method of claim 1, wherein
said graphical option indicator is an arc or a circle, and wherein
multiple arcs or circles are provided to increase the number of displayable options, where the user may choose the currently active arc among the displayed ones.

**6.** An apparatus for performing an interaction between a mobile device and a screen having a plurality of NFC tags comprising data which is read by said mobile device by using an NFC reader module of said mobile device, wherein an image which is part of an application service is displayed on said screen such that one or more tags of the screen correspond to the indication of respective inputs or selections by markers which the user may choose through his mobile device when using said application service, wherein said image being displayed on said screen is controlled by a server on which said application service is running, said server being connected to said mobile device of said user through a network link, said apparatus comprising:
a module adapted to select one NFC tag by the mobile phone of the user;
a module adapted to transmit said selection to said server on which said application service is running;
a module adapted to control in response to said selection, said display on said screen such that there is displayed on said screen a graphical user interface offering a user to select an input;
a module adapted to receive from a gesture detection module of said mobile device data which is generated in response to the user moving his mobile device and which is sensed by said gesture detection module and is then processed as an input to said graphical user interface to thereby perform the selection of said input by said user, wherein
said apparatus is adapted such that said graphical user interface is displayed on said screen if the granularity of said NFC tags is not sufficient so that one NFC tag corresponds to more than one selectable inputs on said screen said apparatus is adapted such said graphical user interface offers a user to select an input by moving the mobile device is displayed in response to the selection of a tag for which there are more than one options to be selected in the area of said tag so that the selection of the tag cannot uniquely identify the selection of an option,
wherein said graphical user interface comprises:
a graphical option indicator which indicates a plurality of possible option which may be chosen by the user:
a graphical selection indicator indicating the currently selected option of said plurality of options, wherein
when the user moves his mobile device said gesture detection module is adapted to sense said movement and processes the resulting data such that a movement of the mobile device by said user results in the movement of the graphical selection indicator to a different selected option indicated by said graphical option indicator as being selected,
wherein said gesture conducted by said mobile device comprises:
rotating said mobile device.

**7.** The apparatus of claim 6, wherein
said graphical option indicator is an arc or a circle which is divided into sections which correspond to different options; or
said graphical option indicator is an arc or a circle which has different colours which correspond to different options, wherein
said graphical option indicator is an arc or a circle which in response to a movement of said mobile device moves such that the a graphical selection indicator indicating the currently selected option points to different selected options as said arc or circle moves,
wherein said graphical selection indicator comprises one or more of the following: an arrow pointing to the currently selected option among the options of said graphical option indicator;
a ball, a shaded section, a cross or any mark which points to or marks the currently selected option among said plurality of options indicated by said graphical option indicator.

**8.** A computer program comprising computer program code which when being executed on a computer enables said computer to carry out a method according to one of claims 1 to 5.
